# EUROPEAN PATENT APPLICATION

(11) **EP 2 418 461 A1**
(43) Date of publication of application: **15.02.2012**
(21) Application number: 11177010.3
(22) Date of filing: 09.08.2011
(51) Int. Cl.: G01C 21/36, G08G 1/123

(54) **Smart vehicle searching system with automatic positioning function**

(30) Priority: 13.08.2010 TW 099127181; 06.12.2010 TW 099142482
(71) Applicant: Delta Electronics, Inc., Taoyuan Hsien 333 (TW)
(72) Inventor: Sun, Chun-Yi, 320 Taoyuan Hsien (TW); Lin, Jon-Hong, 320 Taoyuan Hsien (TW); Lai, Hung-So, 320 Taoyuan Hsien (TW); Lin, Wei-Chun, 320 Taoyuan Hsien (TW)
(74) Representative: 2K Patentanwälte Blasberg Kewitz & Reichel

(57) **Abstract**

A smart vehicle searching system with automatic positioning function is disclosed. The smart vehicle searching system with automatic positioning function includes a vehicle having a control module for outputting a control signal; a vehicle searching module having a first global positioning system unit and connected to the control module for receiving the control signal; a smart phone having a second global positioning system unit and a data storage unit; and a transmission medium connected to the vehicle searching module and the smart phone. The first global positioning system unit is operated in response to the control signal. When the control signal is at a disabling state, the first global positioning system unit proceeds with the positioning operation to obtain the latest location data of the vehicle and transmit the location data to the smart phone through the transmission medium, thereby allowing the smart phone to record the location data in the data storage unit as a reference for the smart phone to search the vehicle.

## Description

### FIELD OF THE INVENTION

The invention relates to a vehicle searching system, and more particularly to a smart vehicle searching system with automatic positioning function,

### BACKGROUND OF THE INVENTION

With the advance of technology, the functionality of vehicle has been greatly improved to facilitate the convenience of driver. The contemporary passive keyless entry system has been utilized in automobiles to allow the driver to unlock the automobile and start the engine. The convenience brought by the passive keyless entry system has been welcomed by automobile users and automakers. However, if the vehicle is parked at an unfamiliar place, such as the parking lot of a shopping mall, the driver may not be able to find his/her vehicle and thereby getting annoyed.

The contemporary vehicle searching technique is made by using a smart phone with global positioning system (GPS) function which can be manually configured. When a car is parked at a fixed location or its engine is stopped, the driver uses the internal software of the smart phone to manually execute a first positioning operation to obtain the location data of the vehicle. Afterwards, the driver may leave the vehicle. When the driver desires to search the vehicle, the internal application software of the smart phone is launched to execute a second positioning operation to obtain the location data of the driver. The internal application software of the smart phone execute the comparison and analysis on the location data of the vehicle and the location data of the driver in order to obtain the correlation between the driver and the vehicle. The correlation between the driver and the vehicle includes the directional relationship and the distance between the driver and the vehicle. In this manner, the vehicle searching operation can be completed.

Nonetheless, the conventional vehicle searching technique requires the driver to manually complete the first positioning operation with the smart phone in order to obtain the location data of the vehicle. As the first positioning operation is complicated and time-consuming, the driver will have difficulty in searching his/her vehicle if the driver does not have enough time to complete the first positioning operation.

### SUMMARY OF THE INVENTION

The object of the invention is to provide a smart vehicle searching system with automatic positioning function. The inventive smart vehicle searching system is made by mounting a vehicle searching module in the vehicle to provide the vehicle with smart vehicle searching function. Also, the vehicle searching module is detachable and may be selectively connected to the control module of the vehicle. Therefore, the vehicle searching module may be mounted on various vehicles.

Another object of the invention is to provide a smart vehicle searching system with automatic positioning function. The inventive smart vehicle searching system is made by integrating passive keyless entry system into the smart vehicle module to promote the convenience of vehicle searching.

To meet the object mentioned above, a broad aspect of the invention provides a smart vehicle searching system with automatic positioning function, which includes a vehicle having a control module for outputting a control signal; a vehicle searching module; a smart phone; and a transmission medium. The vehicle searching module includes a first global positioning system unit connected to the control module for receiving the control signal. The smart phone includes a second global positioning system unit and a data storage unit. The transmission medium is configured to connect the vehicle searching module and the smart phone to allow them to transmit data with each other. The first global positioning system unit is operated in response to the control signal. When the control signal is at the disabling state, the first global positioning system unit proceeds with the positioning operation automatically to obtain the latest location data of the vehicle and transmit the location data to the smart phone through the transmission medium. The smart phone records the location data in the data storage unit for as a reference for the smart phone to search the vehicle.

To meet the object mentioned above, another broad aspect of the invention provides a smart vehicle searching system with automatic positioning function, which includes a vehicle, a smart phone, a vehicle searching module, and a transmission medium. The vehicle includes a control module for outputting a control signal. The smart phone includes a global positioning system unit and a data storage unit. The vehicle searching module is connected to the smart phone for receiving the control signal. The transmission medium is configured to connect the control module and the vehicle searching module for allowing the control module and the smart phone to transmit data with each other. The global positioning system unit of the smart phone is operated in response to the control signal. When the control signal is at the disabling state, the global positioning system unit of the smart phone proceeds with the positioning operation automatically to obtain the latest location data of the vehicle and transmit the location data to the smart phone through the transmission medium. The smart phone records the location data in the data storage unit for as a reference for the smart phone to search the vehicle.

To meet the object mentioned above, another broad aspect of the invention provides a smart vehicle searching system with automatic positioning function, which includes a vehicle, a smart phone, and a transmission medium. The vehicle includes a control module. The smart phone includes a global positioning system unit and a data storage unit. The transmission medium is configured to connect the vehicle and the smart phone to allow them to transmit data with each other. When the vehicle is operated in an enabling state, the control module transmits a starting signal through the transmission medium to the smart phone to activate the global positioning system unit. When the vehicle is operated in a disabling state to obtain the latest location data of the vehicle to allow the smart phone to record the location data in the data storage unit as a reference for the smart phone to search the vehicle.

To meet the object mentioned above, another broad aspect of the invention is to provide a smart vehicle searching system with automatic positioning function, which includes a vehicle, a smart phone, and a transmission medium. The vehicle includes a control module which includes a global positioning system unit. The smart phone a global positioning system unit and a data storage unit. The transmission medium is configured to connect the vehicle and the smart phone to allow them to transmit data with each other. When the vehicle is operated in an enabling state, the global positioning system unit of the control module is automatically activated. When the vehicle is operated in a disabling state, the global positioning system unit of the control module proceeds with the positioning operation to obtain the latest location data of the vehicle and transmits the location data through the transmission medium to the smart phone, thereby allowing the smart phone to record the location data in the data storage unit as a reference for the global positioning system unit of the smart phone to search the vehicle.

Now the foregoing and other features and advantages of the invention will be best understood through the following descriptions with reference to the accompanying drawings, wherein:

### BRIEF DESCRIPTION OF THE DRAWINGS

Fig. 1 shows a smart vehicle searching system with automatic positioning function according to a first embodiment of the invention;

Fig. 2A is a flow chart illustrating the automatic positioning procedure using the smart vehicle searching system of Fig. 1;

Fig. 2B is a flow chart illustrating the vehicle searching procedure using the smart vehicle searching system of Fig. 1;

Fig. 3 shows a smart vehicle searching system with automatic positioning function according to a second embodiment of the invention;

Fig. 4 is a flow chart illustrating the automatic positioning procedure using the smart vehicle searching system of Fig. 3;

Fig. 5 shows a smart vehicle searching system with automatic positioning function according to a third embodiment of the invention;

Fig. 6A is a flow chart illustrating the automatic positioning procedure using the smart vehicle searching system of Fig. 5;

Fig. 6B is a flow chart illustrating the vehicle searching procedure using the smart vehicle searching system of Fig. 5;

Fig. 7 shows a smart vehicle searching system with automatic positioning function according to a fourth embodiment of the invention; and

Fig. 8 is a flow chart illustrating the automatic positioning procedure using the smart vehicle searching system of Fig. 7.

### DESCRIPTION OF THE PREFERRED EMBODIMENT

Several exemplary embodiments embodying the features and advantages of the invention will be expounded in following paragraphs of descriptions. It is to be realized that the invention is allowed to have various modification in different respects, all of which are without departing from the scope of the present invention, and the description herein and the drawings are to be taken as illustrative in nature, but not to be taken as a confinement for the invention.

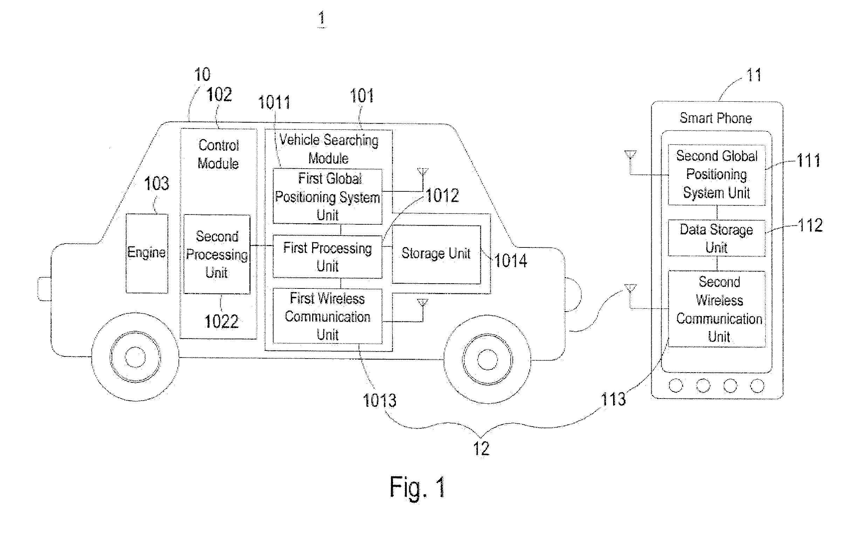

Referring to Fig. 1, a smart vehicle searching system with automatic positioning function according to a first embodiment of the invention is shown. The smart vehicle searching system 1 includes a vehicle 10, a vehicle searching module 101, a smart phone 11, and a transmission medium 12. The vehicle 10 includes a control module 102 for outputting a control signal. The vehicle searching module 101 includes a first global positioning system unit 1011. The vehicle searching module 101 is electrically connected to the control module 102 to receive the control signal and includes a first global positioning system unit 1011. The smart phone provides a global positioning system function and wireless communication function, and includes a second global positioning system unit 111 and a data storage unit 112. The transmission medium 12 is configured to connect the vehicle searching module 101 and the smart phone 11 to allow them to transmit data with each other. The first global positioning system unit 1011 is operated in response to the control signal outputted from the control module 102. When the control signal is at a disabling state, the first global positioning system unit 1011 proceeds with positioning operation automatically to obtain the latest location data of the vehicle 10 and transmits the location data (i.e. the first location data) to the smart phone 11 through the transmission medium 12. The smart phone records the location data in the data storage unit 112 as a reference to activate the vehicle searching function.

In the this embodiment, when the control module 102 is at an enabling state, the first global positioning system unit 1011 is activated automatically. The enabling state of the control module 102 may be the state when the key to the vehicle is in an ON state, or when the engine is ignited. Besides, the disabling state of the vehicle may be the state when the key to the vehicle is in a OFF state, or when the engine is turned off.

The transmission medium 12 includes a first wireless communication unit 1013 and a second wireless communication unit 113. The first wireless communication unit 1013 is mounted in the vehicle searching module 101, and the second wireless communication unit 113 is mounted in the smart phone 11 and wirelessly communicated with the first wireless communication unit 1013. Also, the first wireless communication unit 1013 and the second wireless communication unit 113 can be Bluetooth modules, WiFi modules, WiMax modules, Zigbee modules, UWB modules, or SRD modules.

The vehicle searching module 101 further includes a first processing unit 1012 and a storage unit 1014. The first global positioning system unit 1011, the first wireless communication unit 1013, and the storage unit 1014 are respectively connected to the first processing unit 1012 for processing the data of the first global positioning system unit 1011 and the first wireless communication unit 1013 to be recorded in the storage unit 1014. The storage unit 1014 is independently mounted outside the first processing unit 1012 for storing digital data such as operation program or the location data of the vehicle 10. In alternative embodiments, the storage unit 1014 can be embedded in the first processing unit 1012. In addition, the control module 102 further includes a second processing unit 1022 for outputting a control signal. The first processing unit 1012 of the vehicle searching module 101 is connected to the second processing unit 1022 of the control module 102. Therefore, the first processing unit 1012 can process the control signal outputted from the second processing unit 1022.

In alternative embodiments, the vehicle 10 can be an internal combustion engine vehicle, a hybrid electric vehicle, or an electric vehicle. The propulsion system for driving the vehicle 10 can be implemented by a single engine, an engine plus a motor, or a single motor. The control signal of the control module 102 can be generated by a passive keyless entry system (PKE) or a body control module (BCM). Here, the internal combustion engine vehicle is taken as an example for illustration. The vehicle 10, i.e. the internal combustion engine vehicle, further includes an engine 103. After the engine 103 is started, the states of part of the control signals in the control module 102 are changed. For example, the control signal of which states are changed can be the key signal indicating whether the key is turned on, or the engine operation signal indicating whether the engine is ignited. Hence, the control signal can be the key signal, or the engine operation signal.

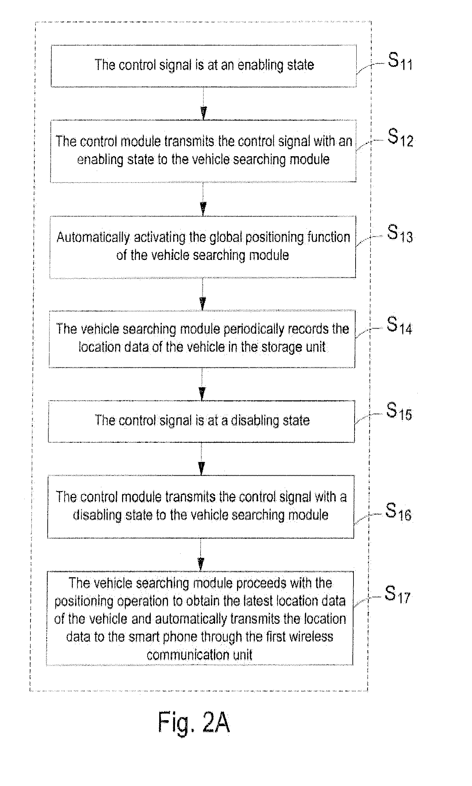

Referring to Fig. 2A and Fig. 1, in which Fig. 2A is a flow chart illustrating the automatic positioning procedure using the smart vehicle searching system of Fig. 1. The automatic positioning procedure of the invention includes the steps S11∼S17. First, as shown in stops S11-S14, when the driver carrying the smart phone 11 enters the vehicle 10 to switch the state of the control signal to an enabling state by starting the engine 103, the control signal with an enabling state generated by the second processing unit 1022 is transmitted to the first processing unit 1012 of the vehicle searching module 101 for activating the first global positioning system unit 1011 of the vehicle searching module 101, thereby continuously receiving satellite information and periodically record the location data of the vehicle 10 in the storage unit 1014. In the meantime, the first wireless communication unit 1013 of the vehicle searching module 101 and the second wireless communication unit 113 of the smart phone 11 can wirelessly communicate with each other.

Next, as shown in steps S13-S17, when the driver leaves the vehicle 10 to switch the state of the control signal to a disabling state by turning off the engine 103, the control signal with a disabling state generated by the second processing unit 1022 is automatically transmitted to the first processing unit 1012. In the meantime, the vehicle searching system 101 proceeds with positioning operation by the satellite information received by the first global positioning system unit 1011 to obtain the latest location data of the vehicle 10. Hence, a data packet is formed and recorded in the storage unit 1014, and transmitted to the smart phone 11 through the transmission medium 12. In other words, when the driver desires to leave the vehicle 10, the first global positioning system unit 1011 of the vehicle searching module 101 proceeds with positioning operation automatically to obtain the latest location data of the vehicle 10 and records the location data in the storage unit 1014. The first wireless communication unit 1013 of the vehicle searching module 101 automatically transmits the location data (i.e. the first location data) to the second wireless communication unit 113 of the smart phone 11 to allow the smart phone 11 to record the location data in the data storage unit 112 as a reference for the smart phone 11 to search the vehicle 10.

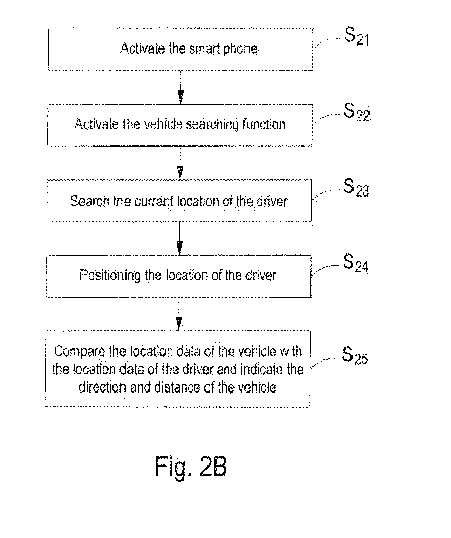

Referring to Fig. 2B and Fig. 1, in which Fig. 2B is a flow chart illustrating the vehicle searching procedure using the smart vehicle searching system of Fig. 1. The vehicle searching procedure according to the invention is as follows. First, at steps S21-S25, the driver activates the vehicle searching function of the smart phone 11 after leaving the vehicle 10. The smart phone 11 receives the satellite information of the driver current position by the second global positioning system unit 111 and proceeds with positioning operation to obtain the location data of the driver. Next, the location data of the driver (i.e. the second location data) is compared with the location data of the vehicle 10 recorded in the data storage unit 112 (i.e. the first location data). Therefore, the driver can find the vehicle 10 by the relative direction and relative distance between the driver and the vehicle 10 revealed by the outcome of the comparison.

Besides, the vehicle searching module 101 will automatically record the location data of the vehicle 10 at different times during the driving process of the vehicle. Hence, the location data recorded in the storage unit 1014 can be provided for the driver to establish the driving route (or historical driving route) of the vehicle 10.

In alternative embodiments, the vehicle searching module 101 is configured as a mobile device which is detachably and selectively attached to the control module 102 of the vehicle 10 through connecting elements (not shown). Hence, the driver can mount the vehicle searching module 101 in various kinds of vehicles to elevate the compatibility of the vehicle searching module 101.

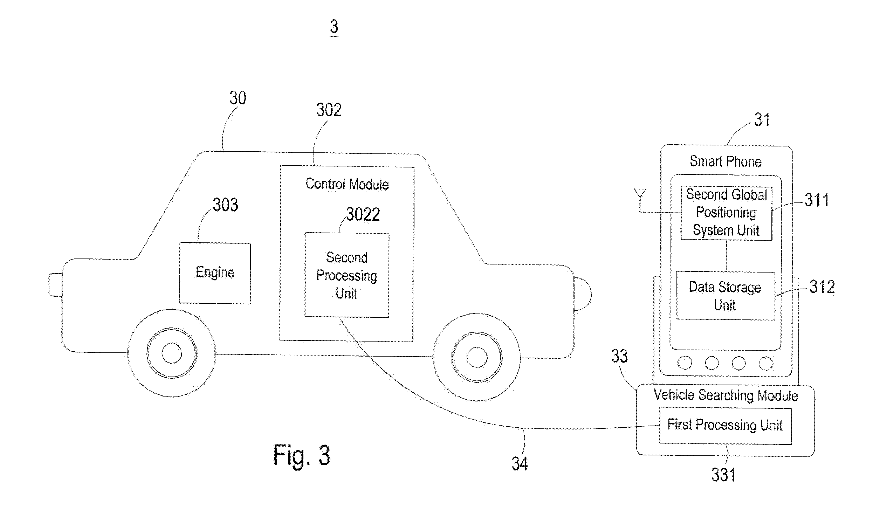

Referring to Fig. 3, which shows a smart vehicle searching system with automatic positioning function according to a second embodiment of the invention. The smart vehicle searching system 3 includes a vehicle 30, a smart phone 31, a vehicle searching module 33, and a transmission medium 34. The vehicle 30 includes a control module 302 for outputting a control signal. The smart phone 31 is able to provide the global positioning function and wireless communication function. The smart phone 31 includes a second global positioning system unit 311 and a data storage unit 312. The vehicle searching module 33 is connected to the smart phone 31 for receiving the control signal. The transmission medium 34 is configured to connect the control module 302 and the vehicle searching module 33 to allow the control module 302 and the smart phone 31 to transmit data with each other. The second global positioning system unit 311 of the start phone 31 is operated in response to the control signal. When the control signal is at a disabling state, the second global positioning system unit 311 automatically proceeds with positioning operation to obtain the latest location data of the vehicle 30, thereby allowing the smart phone 31 to record the location data (i.e. the first location data) in the data storage unlit 312 as a reference for the smart phone 31 to search the vehicle 30.

In the this embodiment, when the control module 302 is at an enabling state, the first global positioning system unit 3011 is activated automatically. The enabling state of the control module 302 can be the state when the key to the vehicle is in an ON state, or when the engine is ignited. Besides, the disabling state of the vehicle can be the state when the key to the vehicle is in an OFF state, or when the engine is turned off.

The vehicle searching module 33 further includes a first processing unit 331 and the control module 302 further includes a second processing unit 3022 for outputting a control signal. The control signal can be a key signal indicating whether the key is turned on, or the engine operation signal indicating whether the engine is ignited. One end of the transmission medium 34 is connected to the first processing unit 331 and the other end of the transmission medium 34 is connected to the second processing unit 3022 for allowing the control module 302 and the vehicle searching module 33 to transmit data with each other. The smart phone 31 may be mounted in the vehicle searching module 33. Therefore, the control module 302 and the smart phone 31 can transmit data with each other through the transmission medium 34 and the vehicle searching module 33.

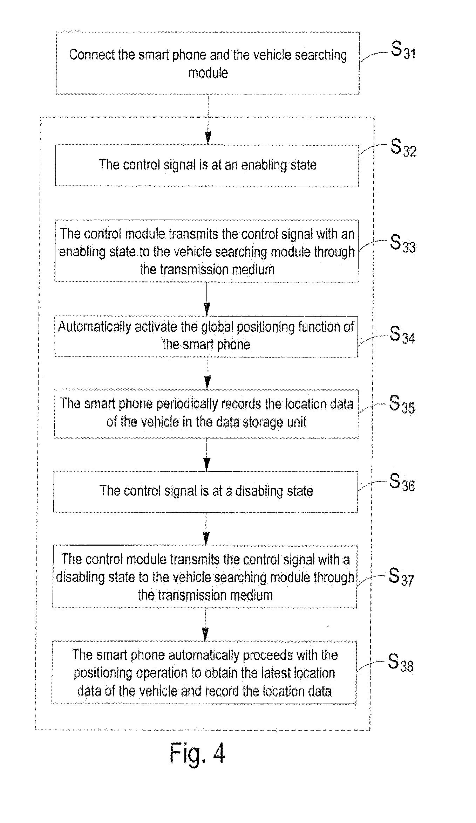

Referring to Figs. 3 and 4, in which Fig. 4 is a flow chart showing the automatic positioning procedure using the smart vehicle searching system of Fig. 3. As shown in Figs. 3 and 4, the automatic positioning procedure of the invention is as follows. First, as shown in step S31, the driver enters the vehicle 30 and mounts the smart phone 31 in the vehicle searching module 33 to connect the smart phone 31 and the vehicles searching module 33.

Next, as shown in steps S32-S38, when the state of the control signal is switched to an enabling state by igniting the engine 303, the control signal with an enabling state generated by the second processing unit 3022 is automatically transmitted to the first processing unit 331 of the vehicle searching module 33 through the transmission medium 34 for activating the second global positioning system unit 311 of the smart phone 31. Therefore, the satellite information is continuously receiving and the location data of the vehicle 30 is periodically recorded in the data storage unit 312. Next, when the driver turns off the engine 303 to switch the state of the control signal to a disabling state, the control signal with a disabling state generated by the second processing unit 3022 is automatically transmitted to the first processing unit 331 of the vehicle searching module 33 through the transmission medium 34. Therefore, the second global positioning system unit 311 of the smart phone 31 which is mounted in the vehicle searching module 33 is able to proceed with the positioning operation automatically to obtain the latest location data of the vehicle 30 (i.e. the first location data). The smart phone 31 records the location data in the data storage unit 312 as a reference for the smart phone to search the vehicle 30.

The vehicle searching procedure using the inventive smart vehicle searching system as shown in Fig. 3 is similar to that illustrated in Fig. 2B. Therefore, it is not intended to dwell upon the details of the vehicle searching procedure in this embodiment.

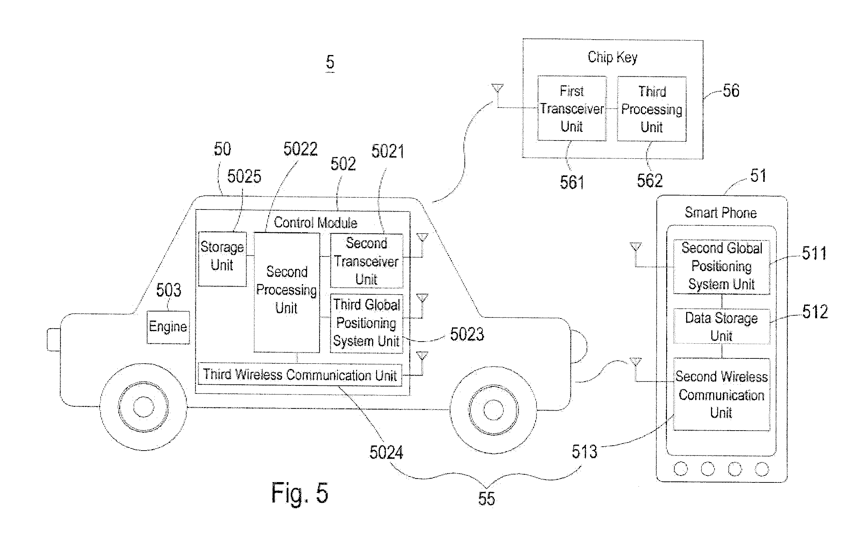

Referring to Fig. 5, a smart vehicle searching system with automatic positioning function according to a third embodiment of the invention is shown. As shown in Fig. 5, the inventive smart vehicle searching system 5 includes a vehicle 50, a smart phone 51, and a transmission medium 55. The vehicle 50 includes a control module 502 which includes a third global positioning system unit 5023. The smart phone 51 provides global positioning function and wireless communication function. The smart phone 51 includes a second global positioning system unit 511 and a data storage unit 512. The transmission medium 55 is configured to connect the vehicle 50 and the smart phone 51 to allow them to transmit data with each other. When state of the vehicle 50 is an enabling state, the third global positioning system unit 5023 is automatically activated. When the state of the vehicle 50 is a disabling state, the third global positioning system unit 5023 automatically proceeds with the positioning operation to obtain the latest location data of the vehicle 50. The location data (i.e. the first location data) is transmitted to the smart phone 51 through the transmission medium 55 to allow the smart phone 51 to record the location data in the data storage unit 512 as a reference for the smart phone 51 to search the vehicle 50.

In this embodiment, the enabling state of the vehicle 50 can be the state when the key to the vehicle is in an ON state, or when the engine is ignited. Besides, the disabling state of the vehicle can be the state when the key to the vehicle is in an OFF state, or when the engine is turned off.

In alternative embodiments, the vehicle 50 can be an internal combustion engine vehicle, a hybrid electric vehicle, or an electric vehicle. The propulsion system for driving the vehicle 50 can be implemented by a single engine, an engine plus a motor, or a single motor. In this embodiment the internal combustion engine vehicle is taken as an example for illustration. The vehicle 50, i.e. an internal combustion engine vehicle, further includes an engine 503 and a chip key 56 which constitute a passive keyless entry system, with the control module 502. The chip key 56 includes a first transceiver unit 561 and a third processing unit 562. The control module 502 includes a second transceiver unit 5021, a second processing unit 5022, and a storage unit 5025, The control module 502 is used to output a control signal. The passive keyless entry system is used to control the locking, unlocking, turning on, and turning off of the vehicle 50. For example, when the driver carrying the chip key 56 approaches the vehicle 50 which includes a control module 502, the control module 502 and the chip key 56 proceed with wireless communication through the first transceiver unit 561 and the second transceiver unit 5021, and the third processing unit 562 and the second processing unit 5022 proceed with authentication process to control the unlocking of the door lock of the vehicle 50. In this way, the driver does not need a key and a remote control to unlock the door lock of the vehicle 50, but can enter the vehicle 50 by directly using the passive keyless entry system. Likewise, when the driver carrying the chip key 56 leaves the vehicle 50 which includes a control module 502, the passive keyless entry system may control the locking of the door lock of the vehicle 50.

Besides, when the driver enters the vehicle 50 and presses the activation switch to turn on the vehicle 50, the engine 503 of the vehicle 50 can be ignited by the wireless communication and authentication process carried out between the control module 502 and the chip key 56. Likewise, when the driver presses the activation switch to turn off the vehicle 50, the engine 503 of the vehicle 50 can be turned off by the wireless communication and authentication process carried out between the control module 502 and the chip key 56.

As the engine 503 is ignited, the states of part of the signals in the control module 502 will be changed. For example, the control signal of which states are changed may be the key signal indicating whether the key is open, or the engine operation signal indicating whether the engine is ignited. Hence, the control signal can be the key signal or the engine operation signal.

The transmission medium 55 further includes a second wireless communication unit 513 and a third wireless communication unit 5024. The second wireless communication unit 513 is mounted in the smart phone 51. The third wireless communication unit 5024 is mounted in the control module 502 and is wirelessly communicated with the second wireless communication unit 513. Also, the second wireless communication unit 513 and the third wireless communication unit 5024 can be Bluetooth modules, WiFi module, WiMax module, Zigbee modules, UWB modules, or SRD modules.

In the this embodiment, the second transceiver unit 5021, the third global positioning system unit 5023, the third wireless communication unit 5024, and the storage unit 5025 are respectively connected to the second processing unit 5022. The data of the second transceiver unit 5021, the third global positioning system unit 5023, and the third wireless communication unit 5024 are processed by the second processing unit 5022. The storage unit 5025 is independently mounted outside the second processing unit 5022 for storing digital data such as the operation program or the location data of the vehicle 50. In alternative embodiments, the storage unit 5025 can also be embedded in the second processing unit 5022.

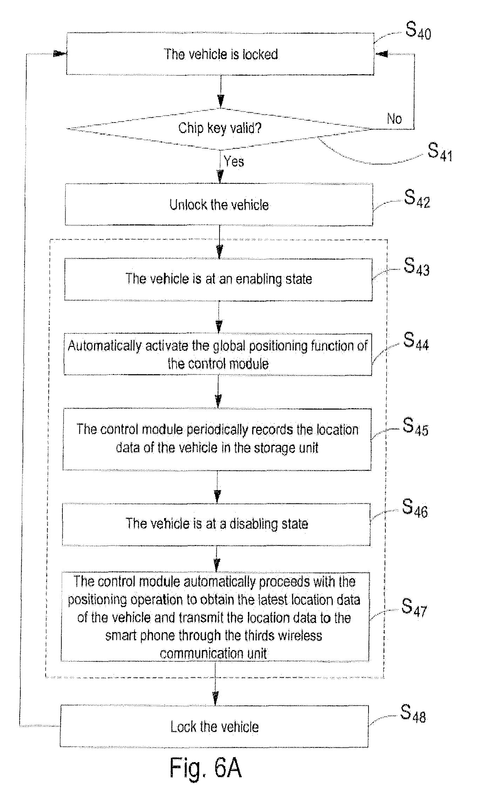

Referring to Fig. 6A and Fig. 5, in which Fig. 6A is a flow chart illustrating the automatic positioning procedure using the smart vehicle searching system of Fig. 5. As shown in Figs. 5 and 6A, the automatic positioning procedure of the invention includes the following steps. First, as shown in steps S40-S42, when the vehicle 50 is locked, the second transceiver unit 5021 of the control module 502 receives the unlocking signal from the chip key 56, and the second processing unit 5022 carries out an authentication process to verify if the chip key 56 is valid. If the chip key 56 is valid, the control module 502 transmits an unlocking signal to unlock the door lock. Next, the driver enters the vehicle 50 with the smart phone 51.

Next, as shown in steps S43-S45, when the driver starts the engine 503 to switch the state of the vehicle 50 to an enabling state, the second processing unit 5022 of the control module 502 automatically transmits a starting signal to the third global positioning system unit 5023 to activate the third global positioning system unit 5023. Therefore, the satellite information can be continuously received and the location data of the vehicle 50 is periodically recorded in the storage unit 5025. In the meantime, the third wireless communication unit 5024 of the control module 502 and the second wireless communication unit 513 of the smart phone 51 can tirelessly communicated with each other.

Next, as shown in steps S46-S47, when the driver turns off the engine 503 to switch the state of the vehicle 50 to a disabling state, the second processing unit 5022 of the control module 502 automatically transmits a stopping signal to the third global positioning system unit 5023, In the meantime, the control module 502 proceeds with the positioning operation with the satellite information received by the third global positioning system unit 5023 to obtain the latest location data of the vehicle 50. Therefore, a data packet is formed and recorded in the storage unit 5025, and transmitted to the smart phone 51 through the transmission medium 55. In other words, when the driver desires to leave the vehicle 50, the third global positioning system unit 5023 of the control module 502 automatically proceeds with the positioning operation to obtain the latest location data of the vehicle 50. The location data of the vehicle is recorded in the storage unit 5025 and transmitted to the second wireless communication unit 513 of the smart phone through the third wireless communication unit 5024 of the control module 502 as a reference for the smart phone 51 to search the vehicle 50.

Next, as shown in step S48, the driver carries the smart phone 51 to leave and lock the vehicle 50.

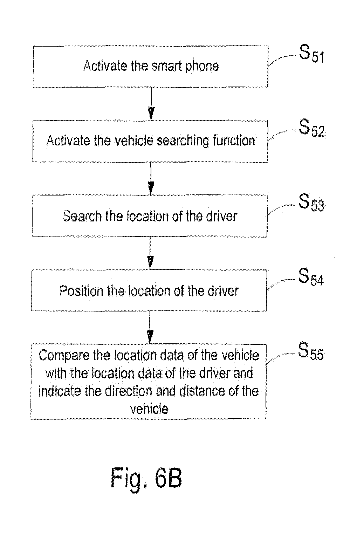

Referring to Fig. 6B and Fig. 5, in which Fig. 6B is a flow chart illustrating the vehicle searching procedure using the smart vehicle searching system of Fig. 5. As shown in Figs. 5 and 6B, the vehicle searching procedure of the invention includes the following steps. As shown in steps S51-S55, the driver activates the smart phone 51 anywhere and activates the vehicle searching function of the smart phone 51. The smart phone 51 employs the second global positioning system unit 511 to search the location of the driver and proceeds with the positioning operation to obtain the second location data. Next, the location data of the driver (i.e. the second location data) is compared with the location data of the vehicle 50 (i.e. the first location data) which is recorded in the data storage unit 512. Hence, the driver is guided to find the vehicle 50 by the relative direction and relative distance between the driver and the vehicle 50 revealed by the outcome of the comparison.

Besides, the vehicle searching module 501 will automatically record the location data of the vehicle 50 at different times during the driving process of the vehicle. Hence, the location data recorded in the storage unit 5014 can be provided for the driver to establish the driving route (or historical driving route) of the vehicle 50.

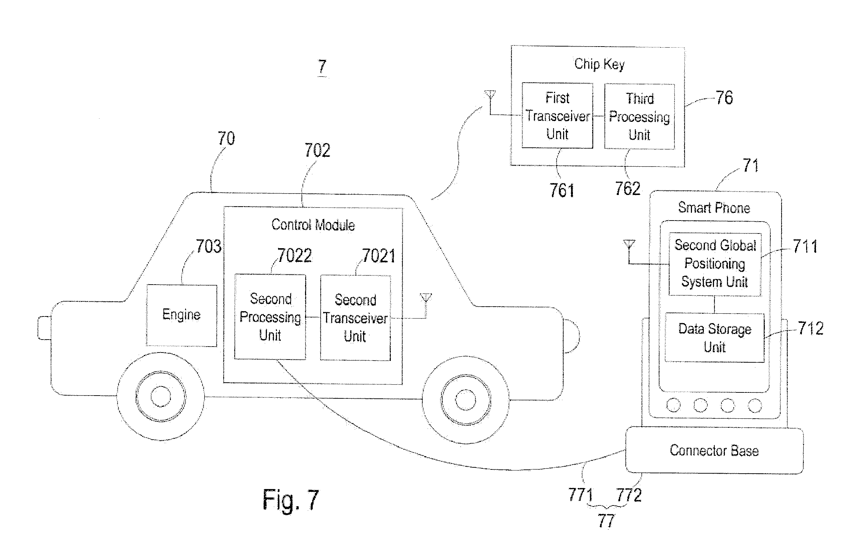

Referring to Fig. 7, a smart vehicle searching system with automatic positioning function according to a fourth embodiment of the invention is shown. As shown in Fig. 7, the inventive smart vehicle searching system 7 includes a vehicle 70, a smart phone 71, and a transmission medium 77. The vehicle 70 includes a control module 702. The smart phone 71 provides global positioning function and wireless communication. The smart phone 71 includes a second global positioning system unit 711 and a data storage unit 712. The transmission medium 77 is configured to connect the vehicle 70 and the smart phone 71 to allow them to transmits data with each other. When the state of the vehicle 70 is an enabling state, the control module 702 automatically transmits a starting signal to the smart phone 71 through the transmission medium 77 in order to activate the second global positioning system unit 711. When the state of the vehicle 70 is a disabling state, the second global positioning system unit 711 of the smart phone 71 automatically proceeds with the positioning operation to obtain the latest location data of the vehicle 70 (i.e. the first location data). The smart phone 71 records the location data of the vehicle 70 in the data storage unit 712 such that the smart phone uses the location data of the vehicle 70 as a reference for searching the vehicle 70.

In the present embodiment, the enabling state of the vehicle 70 can be the state when the key to the vehicle is in an ON state, or when the engine is ignited. Besides, the disabling state of the vehicle can be the state when the key to the vehicle is in an OFF state, or when the engine is turned off.

In alternative embodiments, the vehicle 70 can be an internal combustion engine vehicle, a hybrid electric vehicle, or an electric vehicle. The propulsion system for driving the vehicle 70 may be implemented by a single engine, an engine plus a motor, or a single motor. In this embodiment, the internal combustion engine vehicle is taken as an example for illustration.

The vehicle 70 further includes an engine 703 and a chip key 76. The chip key 76 and the control module 702 constitute a passive keyless entry system. The chip key 76 includes a first transceiver unit 761 and a third processing unit 762. The control module 702 includes a second transceiver unit 7021 and a second processing unit 7022. The second processing unit 7022 is used to output a control signal. The passive keyless entry system is used to control the locking, unlocking, turning on, and turning off of the vehicle 70.

In this embodiment, as the engine 703 is ignited, the states of part of the signals in the control module 702 will be changed. For example, the control signal of which states are changed may be the key signal indicating whether the key is turned on, or the engine operation signal indicating whether the engine is ignited. Hence, the control signal may be the key signal, or the engine operation signal.

The transmission medium 77 includes a transmission line 771 and a connector base 772. One end of the transmission line 771 is connected to the control module 702 of the vehicle 70 and the output end of a power converter unit (not shown), and the other end of the transmission line 771 is connected to the connector base 772 for transmitting power and data. In the present embodiment, the connector base can be a charging pod. The smart phone 71 may be inserted in the connector base 772. Therefore, the connector base 772 can charge the smart phone 71, and the control module 702 and the smart phone 71 can transmit data with each other.

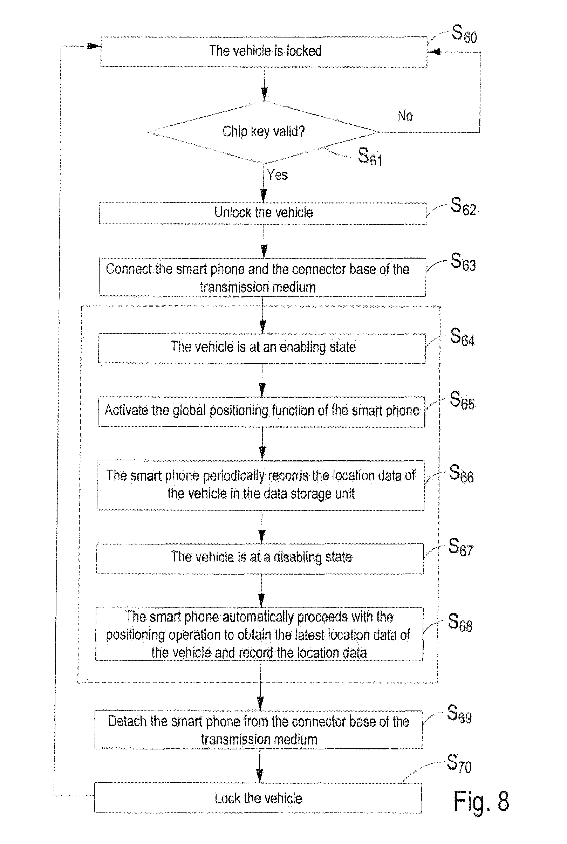

Fig. 8 is a flow chart illustrating the automatic positioning procedure using the smart vehicle searching system of Fig. 7. The automatic positioning procedure of the invention includes the following steps. First, as shown in steps S60-S63, when the vehicle 70 is locked, the second transceiver unit 7021 of the control module 702 receives the unlocking signal from the chip key 76, and the second processing unit 7022 carries out an authentication process to verify if the chip key 76 is valid. If the chip key 76 is valid, the control module 702 transmits an unlocking signal to unlock the door lock. Next, the driver enters the vehicle 70 with the smart phone 71 and inserts the smart phone 71 into the connector base 772 of the transmission medium 77, thereby connecting the smart phone 71 and the connector base 772.

Next, as shown in steps S64-S66, when the state of the vehicle 70 is switched to an enabling state by starting the engine 703, the second processing unit 7022 of the control module 702 automatically transmitting a starting signal to the smart phone 71 through the transmission line 771 and the connector base 772, thereby activating the second global positioning system unit 711 to continuously receiving satellite information and periodically record the location data of the vehicle 70 in the data storage unit 712.

Next, as shown in steps S67-S68, when the driver turns off the engine 703 to switch the state of the vehicle to a disabling state, the second processing unit 7022 of the control module 702 automatically transmits a stopping signal to the smart phone through the transmission line 771 and the connector base 772. Thus, the second global positioning system unit 711 of the smart phone which is inserted in the connector base 772 automatically proceeds with the positioning operation to obtain the latest location data of the vehicle 70 (i.e. the first location data). The smart phone 71 records the location data in the data storage unit 712.

Next, as shown in steps S69-S70, the driver detaches the smart phone 71 from the connector base 772 of the transmission medium 77 to leave and lock the vehicle 70.

In this embodiment, the vehicle searching procedure of the invention is similar to that shown in Fig. 6. Thus, the vehicle searching procedure of the invention according to this embodiment is not described herein.

In conclusion, the invention discloses a smart vehicle searching system with automatic positioning function which is derived by adding a mobile vehicle searching module to the vehicle. Hence, the vehicle is provided with the vehicle searching function. Therefore, the problems as a result of the complicated and time-wasting operation procedure for manually positioning the vehicle by the smart phone can be addressed. Therefore, the convenience of vehicle searching is improved. Also, the invention empowers the passive keyless entry system or the control module of the vehicle with smart vehicle searching function. On the other hand, the inventive smart vehicle searching system can automatically position the location of the vehicle in a wired fashion or in a wireless fashion. Thus, the driver can easily find his/her vehicle. Finally, the vehicle searching module of the invention can be detachably connected to the control module of the vehicle. Thus, the vehicle searching module of the invention can be used in a variety of vehicles to increase its compatibility.

While the invention has been described in terms of what are presently considered to be the most practical and preferred embodiments, it is to be understood that the invention need not be restricted to the disclosed embodiment. On the contrary, it is intended to cover various modifications and similar arrangements includes within the spirit and scope of the appended claim which are to be accorded with the broadest interpretation so as to encompass all such modifications and similar structures. Therefore, the above description and illustration should not be taken as limiting the scope of the invention which is defined by the appended claims.

## Claims

1. A smart vehicle searching system with automatic positioning function, comprising:
a vehicle having a control module configured to output a control signal;
a smart phone;
a vehicle searching module connected to the smart phone and the control module for receiving the control signal; and
a transmission medium configured to connect the vehicle searching module and the smart phone for allowing the vehicle searching module and the smart phone to transmit data with each other;
when the control signal is at a disabling state, the vehicle searching module automatically proceeds with a positioning operation to obtain a latest location data of the vehicle and transmits the location data to the smart phone, thereby allowing the smart phone to record the location data as a reference for the smart phone to search the vehicle.

2. The smart vehicle searching system according to claim 1, wherein the vehicle searching module comprises a first global positioning system unit and the first global positioning system unit is operating in response to the control signal.

3. The smart vehicle searching system according to claim 2, wherein when the control signal is at an enabling state, the first global positioning system unit is automatically activated.

4. The smart vehicle searching system according to claim 2 or 3, wherein the vehicle searching module further includes a first processing unit, wherein the first global positioning system unit and the first wireless communication unit are respectively connected to the first processing unit, thereby allowing the first processing unit to process the data of the first global positioning system unit and the first wireless communication unit.

5. The smart vehicle searching system according to claim 4, wherein the vehicle searching module further includes a storage unit, wherein the first global positioning system unit, the first wireless communication unit, and the storage unit are respectively connected to the first processing unit, thereby allowing the first processing unit to process the data of the first global positioning system unit and the first wireless communication unit and record the data of the first global positioning system unit and the first wireless communication unit in the storage unit.

6. The smart vehicle searching system according to claim 4 or 5, wherein the control module includes a second processing unit connected to the first processing unit of the vehicle searching module, and wherein the first processing unit is used to receive and process the control signal outputted from the second processing unit.

7. The smart vehicle searching system according to any of the preceding claims, wherein the smart phone comprises a second global positioning system unit and a data storage unit.

8. The smart vehicle searching system according to any of the preceding claims, wherein the transmission medium, includes:
a first wireless communication unit disposed in the vehicle searching module, and
a second wireless communication unit disposed in the smart phone for communicating with the first wireless communication unit.

9. The smart vehicle searching system according to claim 8, wherein the first wireless communication unit and the second wireless communication unit are Bluetooth modules, WiFi modules, WiMax modules, Zigbee modules, UWB modules, or SRD modules.

10. The smart vehicle searching system according to any of the preceding claims, wherein the smart phone is capable of providing global positioning function and wireless communication function.

11. The smart vehicle searching system according to any of the preceding claims, wherein the control signal is generated by a passive keyless entry system or a body control module, and wherein the control signal is a key signal, a dashboard power signal, or an engine operation signal.

12. The smart vehicle searching system according to any of the preceding claims, wherein the vehicle searching module is detachably connected to the control module of the vehicle.

13. The smart vehicle searching system according to any of the preceding claims, wherein the vehicle searching module includes a first processing unit and the control module includes a second processing unit, wherein the transmission medium is configured to connect the first processing unit of the vehicle searching module and the second processing unit of the control module for allowing the first processing unit and the second processing unit to transmit data with each other.

14. The smart vehicle searching system according to any of the preceding claims, wherein the smart phone is inserted into the vehicle searching module.

15. A smart vehicle searching system with automatic positioning function, comprising:
a vehicle having a control module;
a smart phone; and
a transmission medium configured to connect the vehicle and the smart phone tor allowing the vehicle and the smart phone to transmit data with each other;
wherein when a state of the vehicle is an enabling state, the control module automatically transmits a starting signal to the smart phone through the transmission medium, and when the state of the vehicle is a disabling state, the smart phone automatically proceeds with a positioning operation to obtain a latest location data of the vehicle as a reference for the smart phone to search the vehicle.

16. The smart vehicle searching system according to claim 15, wherein the enabling state of the vehicle is the state where a key to the vehicle is ON, or an engine of the vehicle is ignited.

17. The smart vehicle searching system according to claim 15 or 16, wherein the vehicle further includes a chip key which constitutes a passive keyless entry system with the control module.

18. The smart vehicle searching system according to any of claims 15 to 17, wherein the transmission medium includes a transmission line and a connector base.

19. The smart vehicle searching system according to claim 18, wherein the connector base is a charging pod.

20. The smart vehicle searching system according to any of claims 15 to 19, wherein the control module includes a global positioning system unit, and a smart phone includes a global positioning system unit and a data storage unit.

21. The smart vehicle searching system according to any of claims 15 to 20, wherein the transmission medium includes two wireless communication units which are respectively mounted in the smart phone and in the control module and are configured to communicate with each other.

22. The smart vehicle searching system according to any of claims 15 to 21, wherein the control module is a controller of a passive keyless entry system, and wherein the passive keyless entry system further includes a chip key.

23. The smart vehicle searching system according to any of claims 15 to 22, wherein the vehicle further comprises an engine and a chip key including a first transceiver unit and a third processing unit, the chip key and the control module constitute a passive keyless entry system, the control module includes a second transceiver unit and a second processing unit, wherein the second processing unit is used to output a control signal and the passive keyless entry system is used to control the locking, unlocking, turning on, and turning off of the vehicle.

24. The smart vehicle searching system according to any of claims 15 to 23, wherein the vehicle comprises an engine and a chip key comprising a first transceiver unit and a third processing unit, the control module comprises a second transceiver unit, a second processing unit and a storage unit, the smart phone comprises a second global positioning system unit and a data storage unit, and the transmission medium further comprises a second wireless communication unit mounted in the smart phone and a third wireless communication unit mounted in the control module.
